# EUROPEAN PATENT APPLICATION

(11) **EP 4 600 609 A1**
(43) Date of publication of application: **13.08.2025**
(21) Application number: 24221406.2
(22) Date of filing: 19.12.2024
(51) Int. Cl.: G01C 21/30, G01C 21/16, G06V 20/56

(54) **LANE-LEVEL POSITIONING METHOD AND APPARATUS, SMART DEVICE, AND STORAGE MEDIUM**

(30) Priority: 08.02.2024 CN 202410178264
(71) Applicant: Anhui NIO Autonomous Driving Technology Co., Ltd., Hefei City, Anhui 230611 (CN)
(72) Inventor: CHEN, Jiannan, Hefei City, 230611 (CN); GE, Wuwei, Hefei City, 230611 (CN); SONG, Yu, Hefei City, 230611 (CN); REN, Shaoqing, Hefei City, 230611 (CN)
(74) Representative: Vossius & Partner Patentanwälte Rechtsanwälte mbB

(57) **Abstract**

The invention relates to the field of vehicle positioning technologies, and specifically provides a lane-level positioning method, a lane-level positioning apparatus, a smart device, and a computer-readable storage medium. The method includes: A. determining first lane-level positioning of a vehicle in a perception environment based on vehicle perception information and standard-definition (SD) map information; B. determining second lane-level positioning of the vehicle on a high-definition (HD) map by using a fusion positioning technique; C. performing validity verification on HD map information based on the vehicle perception information and the SD map information; and D. determining a lane-level positioning result for the vehicle based on the first lane-level positioning and/or the second lane-level positioning and a result of the validity verification.

## Description

### CROSS REFERENCE TO RELATED APPLICATIONS

This application claims priority to Chinese Patent Application NO. 202410178264.X, titled "LANE-LEVEL POSITIONING METHOD AND APPARATUS, SMART DEVICE, AND STORAGE MEDIUM", filed February 8, 2024, the entire contents of which are incorporated herein by reference.

### Technical Field

The invention relates to the field of vehicle positioning technologies, and more particularly, to a lane-level positioning method, a lane-level positioning apparatus, a smart device for implementing the method, and a computer-readable storage medium for implementing the method.

### Background Art

When a vehicle is in a scenario such as navigation or intelligent driving, a specific lane in which the vehicle is located on a road needs to be determined, to facilitate prompting a user or driving planning. Currently, a global positioning system (GPS) is mainly used with a high-definition (HD) map to implement lane-level positioning of a vehicle. Such a method works well in an open area, but has a problem of inaccurate positioning in an urban area, especially in an area with tall buildings. In addition, some autonomous driving systems use HD sensors such as a Lidar to improve positioning accuracy. However, in a complex urban environment, real-time perception and a static HD map are usually inconsistent, and the static HD map also has a problem of insufficient freshness, which brings a challenge to lane-level positioning on the HD map.

It should be noted that the information disclosed in the above Background Art section is only used to enhance the understanding of the background of the invention, and may therefore include information that does not belong to the prior art known to those of ordinary skilled in the art.

### Summary

To solve or at least solve one or more of the above problems, the following technical solutions are provided. Embodiments of the invention provide a lane-level positioning method, a lane-level positioning apparatus, a smart device for implementing the method, and a computer-readable storage medium for implementing the method, which can improve the accuracy and reliability of lane positioning in a complex urban traffic environment, to provide higher-precision navigation and safer driving guarantee for vehicles.

According to a first aspect of the invention, a lane-level positioning method is provided. The method includes the following steps: A. determining first lane-level positioning of a vehicle in a perception environment based on vehicle perception information and standard-definition (SD) map information; B. determining second lane-level positioning of the vehicle on a HD map by using a fusion positioning technique; C. performing validity verification on HD map information based on the vehicle perception information and the SD map information; and D. determining a lane-level positioning result for the vehicle based on the first lane-level positioning and/or the second lane-level positioning and a result of the validity verification.

As an alternative or addition to the above solution, in the lane-level positioning method according to an embodiment of the invention, step A includes: generating perceived lane line information, road marking information, dynamic traffic information, and static occupancy information based on information collected by vehicle-mounted sensors of the vehicle; and inputting the perceived lane line information, the road marking information, the dynamic traffic information, the static occupancy information, and the SD map information into a road boundary inference model, and determining, by using the road boundary inference model, drivable boundary information about a road on which the vehicle is located.

As an alternative or addition to the above solution, in the lane-level positioning method according to an embodiment of the invention, the determining, by using the road boundary inference model, drivable boundary information about a road on which the vehicle is located includes: outputting, by using the road boundary inference model, lane boundary information and lane type information of each lane in the road on which the vehicle is located; and determining, based on the lane boundary information and lane type information of each lane, the drivable boundary information about the road on which the vehicle is located.

As an alternative or addition to the above solution, in the lane-level positioning method according to an embodiment of the invention, the generating perceived lane line information, road marking information, dynamic traffic information, and static occupancy information based on information collected by vehicle-mounted sensors of the vehicle includes: inputting the information collected by the vehicle-mounted sensors into a bird's eye view network, and determining the perceived lane line information, the road marking information, the dynamic traffic information, and the static occupancy information by using the bird's eye view network, where the perceived lane line information includes a geometric feature, a line type, and a color of a perceived lane line, the dynamic traffic information includes a category, a speed, and a position of a dynamic perceived object, and the static occupancy information includes occupancy information about a static perceived object.

As an alternative or addition to the above solution, in the lane-level positioning method according to an embodiment of the invention, step A further includes: determining, based on the drivable boundary information about the road on which the vehicle is located and the vehicle perception information, the first lane-level positioning for indicating a lane in which the vehicle is located.

As an alternative or addition to the above solution, in the lane-level positioning method according to an embodiment of the invention, the method further includes: if the vehicle perception information indicates that the perceived lane line has an unclear boundary and/or an incomplete geometric feature, re-determining the first lane-level positioning upon determining, based on the SD map information output by a navigation map, that the vehicle changes a lane or a number of lanes changes.

As an alternative or addition to the above solution, in the lane-level positioning method according to an embodiment of the invention, step B includes: determining vehicle position information based on navigation information and vehicle inertial measurement information; and determining the second lane-level positioning of the vehicle on the HD map through map matching based on the vehicle position information and HD map information.

As an alternative or addition to the above solution, in the lane-level positioning method according to an embodiment of the invention, step C includes: determining, based on the vehicle perception information, a first number of lanes in a road on which the vehicle is located in the perception environment; determining, based on vehicle position information and the SD map information, a second number of lanes in the road on which the vehicle is located on a SD map; determining, based on the vehicle position information and the HD map information, a third number of lanes in the road on which the vehicle is located on a HD map; and the validity verification succeeding if a similarity between the third number and a weighted sum of the first number and the second number is greater than or equal to a first threshold.

As an alternative or addition to the above solution, in the lane-level positioning method according to an embodiment of the invention, step C includes: determining, based on the vehicle perception information, a first road marking on a road on which the vehicle is located in the perception environment; determining turning information of the vehicle based on vehicle position information and the SD map information; determining, based on the vehicle position information and the HD map information, a second road marking on the road on which the vehicle is located on a HD map; and the validity verification succeeding if the first road marking or the turning information matches the second road marking.

As an alternative or addition to the above solution, in the lane-level positioning method according to an embodiment of the invention, step C includes: determining a similarity between lane boundary information of each lane in a road on which the vehicle is located on a HD map and lane boundary information of each lane in a road on which the vehicle is located in the perception environment; and the validity verification succeeding if the similarity in terms of the lane boundary information is greater than or equal to a second threshold. As an alternative or addition to the above solution, in the lane-level positioning method according to an embodiment of the invention,

As an alternative or addition to the above solution, in the lane-level positioning method according to an embodiment of the invention, step D includes: determining the second lane-level positioning as the lane-level positioning result for the vehicle if the validity verification succeeds.

As an alternative or addition to the above solution, in the lane-level positioning method according to an embodiment of the invention, step D includes: if the verification fails, correcting a fusion positioning result based on the first lane-level positioning to obtain corrected second lane-level positioning and determining the corrected second lane-level positioning as the lane-level positioning result for the vehicle,; or if the verification fails, determining the first lane-level positioning as the lane-level positioning result for the vehicle.

According to a second aspect of the invention, a lane-level positioning apparatus is provided. The apparatus includes: a memory; a processor; and a computer program stored on the memory and executable on the processor, where the computer program is executed to perform any one of the lane-level positioning methods according to the first aspect of the invention.

According to a third aspect of the invention, a smart device is provided. The smart device includes the lane-level positioning apparatus according to the second aspect of the invention.

According to a fourth aspect of the invention, a computer storage medium is provided. The computer storage medium includes instructions, where when the instructions are executed, any one of the lane-level positioning methods according to the first aspect of the invention is performed.

According to the lane-level positioning solution in one or more embodiments of the invention, the validity verification can be performed on the HD map information by using the vehicle perception information collected by the sensors and the SD map information provided by the navigation map, and the final positioning can be determined based on the verification result. Through fusion of multi-source information and mutual verification between the multi-source information, the solution improves the accuracy and reliability of lane positioning in the complex urban traffic environment, and solves the problem of inaccurate positioning caused by insufficient freshness of a HD map or an inaccurate GPS signal in an urban area, to provide with higher-precision navigation and safer driving guarantee for users.

### Brief Description of the Drawings

The above-mentioned and/or other aspects and advantages of the invention will become more apparent and more readily understood with the following description of various aspects in conjunction with the accompanying drawings, in which the same or similar units are denoted by the same reference numerals. In the accompanying drawings:
FIG. 1 is a schematic flowchart of a lane-level positioning method 10 according to one or more embodiments of the invention;
FIG. 2 is a schematic block diagram of a lane-level positioning apparatus 20 according to one or more embodiments of the invention; and
FIG. 3 is a schematic block diagram of a smart device 30 according to one or more embodiments of the invention.

### Detailed Description of Embodiments

The following descriptions of specific implementations are merely illustrative, and are not intended to limit the disclosed technologies or the application and use of the disclosed technologies. In addition, there is no intention to be bound by any expressed or implied theory presented in the foregoing Technical Field and Background Art or the following Detailed Description.

In the following detailed descriptions of the embodiments, many specific details are set forth to provide a more thorough understanding of the disclosed technologies. However, it is obvious for those of ordinary skilled in the art that the disclosed technologies may be practiced without these specific details. In other instances, well-known features are not detailed, to avoid complicating the descriptions unnecessarily.

The terms such as "include" and "comprise" are used to indicate that in addition to units and steps that are directly and clearly described in this specification, other units and steps that are not directly or clearly described are not excluded in the technical solutions of the invention. The terms such as "first" and "second" are not used to indicate sequences of the units in terms of time, space, size, etc., and are merely used to distinguish between the units. The technologies in the invention are commonly used in electric vehicles, including, but not limited to, battery electric vehicles (BEVs), hybrid electric vehicles (HEVs), fuel cell electric vehicles (FCEVs), etc.

In the invention, an autonomous driving system (ADS) means that the system continuously performs all dynamic driving tasks (DDTs) within its own operational domain design (ODD). That is, a machine system is allowed to fully undertake the task of automatic vehicle maneuvering only under specified conditions of appropriate driving scenarios. Specifically, the system is activated when the vehicle meets the ODD conditions, such that the system takes over from a human driver as the driving subject of the vehicle. The dynamic driving task (DDT) refers to continuous lateral (left and right steering) and longitudinal motion control (acceleration, deceleration, and constant speed) of the vehicle, as well as detection of and response to a target and an event in a driving environment of the vehicle. The operational domain design (ODD) refers to conditions under which the autonomous driving system can operate safely, and the conditions set therefor can include a geographical location, a road type, a speed range, weather, time, national and local traffic laws and regulations, etc. The autonomous driving system herein can implement various levels of autonomous driving functions on the basis of a navigation function, including, but not limited to, a pilot function, an autonomous driving function, and a driverless function.

As described above, the current ADS mainly uses GPS with a HD map to implement lane-level positioning of a vehicle, which method works well in an open area, but has a problem of inaccurate positioning in an urban area, especially in an area with tall buildings. In addition, some ADSs use HD sensors such as a Lidar to improve positioning accuracy, but in a complex urban environment, real-time perception and static HD map information usually do not match, and the HD map maintains freshness at an extremely high cost due to quite frequent road infrastructural construction and road changes in the urban area. As a result, HD map information also has a serious problem of insufficient freshness, which brings a challenge to lane-level positioning on the HD map. In view of this, the invention provides a lane-level positioning solution based on fusion of multi-source information, which solution improves the accuracy and reliability of lane positioning in the complex urban traffic environment through mutual verification between multi-source information, in order to solve the problem of inaccurate positioning caused by insufficient freshness of the HD map or an inaccurate GPS signal in the urban area.

Various illustrative embodiments of the invention are described below in detail with reference to the accompanying drawings.

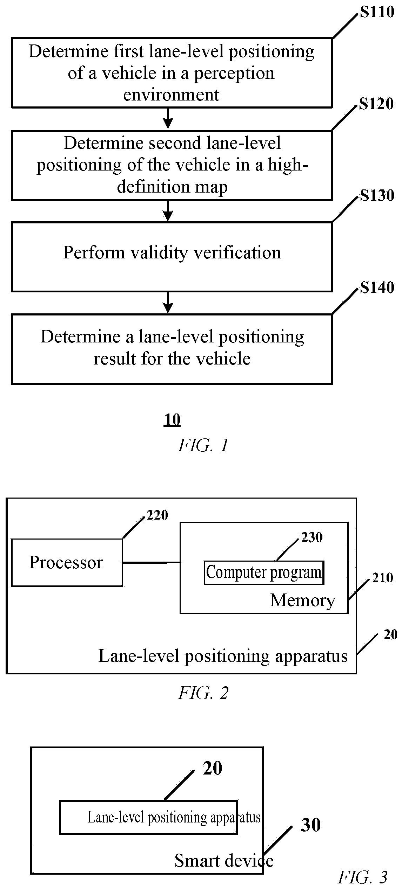

Referring to the accompanying drawings below, FIG. 1 is a schematic flowchart of a lane-level positioning method 10 according to one or more embodiments of the invention.

As shown in FIG. 1, in step S 110, first lane-level positioning of a vehicle in a perception environment is determined based on vehicle perception information and SD map information.

The vehicle perception information in the invention refers to information about the surrounding environment (for example, road and traffic conditions (such as a road width, a road sign, and a traffic light status) and obstacle information (for example, dynamic objects (such as another vehicle, a pedestrian, and a non-motorized vehicle) and static obstacles (such as grass and stones))) that is collected by the vehicle by using various sensors, or information that can describe the surrounding environment and that is generated based on such directly collected sensor information. The sensor herein refers to various sensors mounted on the vehicle, including a camera, a millimeter-wave radar, a Lidar, etc., or it may also include a positioning system configured to obtain position information of a vehicle, an inertial measurement unit (IMU) configured to obtain inertial measurement information of a vehicle, a speed sensor, an acceleration sensor, a humidity sensor configured to obtain an environment state, a light intensity sensor, and any other sensor.

In one or more embodiments according to the invention, in step S 110, perceived lane line information, road marking information, dynamic traffic information, and static occupancy information may first be generated based on the information collected by the vehicle-mounted sensors of the vehicle. For example, the information collected by the vehicle-mounted sensors may be input into a bird's eye view (BEV) network, and the perceived lane line information, the road marking information, the dynamic traffic information, and the static occupancy information can be determined by using the BEV network. BEV means viewing and presenting something from a bird's eye view or an angle of elevation. In the field of automobiles, the BEV network can capture a visual field around the vehicle by using a plurality of cameras and/or other sensors, and integrate the information through image processing and a fusion algorithm to generate a panoramic view like a bird's eye view. In the panoramic view, details such as obstacles around the vehicle, lanes, and traffic signs can be displayed, to help a driver understand the surroundings more clearly and provide more accurate driving guidance. For example, the perceived lane line information may include one or more of the geometric features, line type, color, intercept, and slope of the perceived lane line, and the number of lane lines in the road. The dynamic traffic information may include the category, speed, and position information of each dynamic object (i.e., a dynamic perceived object, such as another vehicle, a pedestrian, or a non-motor vehicle) that is perceived by the vehicle. The static occupancy information may include occupancy information of each static object (i.e., a static perceived object, such as grass or a stone) that is perceived by the vehicle, including, but not limited to, an occupancy status (for example, occupied, unoccupied, or unknown) and a semantic category (for example, a plant or a rock).

In one or more embodiments according to the invention, in step S 110, the above perceived lane line information, road marking information, dynamic traffic information, static occupancy information, and SD map information may be input into a road boundary inference model, and lane boundary information and lane type information of each lane in the road on which the vehicle is located are output by using the road boundary inference model. For example, the above road boundary inference model may be a machine learning (ML)-based and/or deep learning (DL)-based model. The ML-based road boundary inference model usually uses a computer vision technique and a feature extraction method, such as edge detection or Hough transform, to train a classifier or a regressor to determine whether pixels in an image belong to a lane line or a road boundary. The DL-based road boundary inference model can automatically learn features from original data and has a stronger generalization capability. For example, backflow data from mass-produced vehicles may be used as an input for the training of the road boundary inference model, so that the lane boundary information and lane type information of each lane, such as a co-directional motor lane, an opposite motor lane, a non-motorized lane, and a bus lane, can be automatically inferred in real time. In one or more embodiments of the invention, the multi-source information (for example, the perceived lane line information, the road marking information, the dynamic traffic information, the static occupancy information, and the SD map information) is fused to improve the redundancy and reliability of an inference result. In addition, the ML model or the DL model, instead of a static rule set, is used to implement efficient learning and processing of massive data, which significantly improves the system's ability to adapt to a complex road environment and the identification precision of the system in the complex road environment. This data-driven method optimizes the generalization capability of the model, and ensures that accurate navigation and driving assistance can be continuously provided in changing road conditions.

In an embodiment, after the lane boundary information and lane type information of each lane in the road on which the vehicle is located are obtained, drivable boundary information about the road on which the vehicle is located may be further determined accordingly. It may be understood that a drivable boundary of the road includes a drivable left boundary and a drivable right boundary of the road, where the drivable left boundary refers to a left boundary of the leftmost lane among co-directional motor lanes (excluding opposite lanes), and the drivable right boundary refers to a right boundary of the rightmost lane among the co-directional motor lanes (excluding a co-directional non-motor lane). In another embodiment, the drivable boundary information about the road on which the vehicle is located may alternatively be output by directly using the road boundary inference model.

In one or more embodiments according to the invention, in step S 110, after the lane boundary information and lane type information of each lane are determined, or after the drivable boundary information about the road on which the vehicle is located is determined, the first lane-level positioning for indicating a lane in which the vehicle is located may be determined based on the lane boundary information, the lane type information, and the vehicle perception information, or based on the drivable boundary information and the vehicle perception information. Specifically, a specific lane in which the vehicle is located from the left or a specific lane in which the vehicle is located from the right in the perception environment may be accurately determined by identifying the number of lanes on the left side of the vehicle and the number of lanes on the right side of the vehicle.

Optionally, if the vehicle perception information indicates that the perceived lane line has an unclear boundary and/or an incomplete geometric feature (that is, if the lane line is not effectively identified), continuous tracking of the first lane-level positioning may be performed depending on whether the vehicle changes a lane or whether the number of lanes changes. For example, if it is determined, based on the SD map information output by the navigation map, that the vehicle changes a lane or the number of lanes changes, a re-positioning process is triggered to reconfirm the lane in which the vehicle is located. Thereafter, the lane positioning result (that is, the first lane-level positioning) may be continuously tracked to ensure its continuity and accuracy. Specifically, if the vehicle does not change a lane and the number of lanes in the current road does not change, continuous tracking of the lane positioning result may be performed in time sequence to maintain the coherence of positioning. If the vehicle changes a lane or the current number of lanes changes, continuous tracking of the lane positioning result may be performed in spatial sequence, to maintain the accuracy of positioning by determining a specific lane change direction.

Next, in step S 120, second lane-level positioning of the vehicle on a HD map is determined by using a fusion positioning technique.

The fusion positioning technique enables simultaneous use of multi-source data (such as GPS, IMU, and map data) to implement precise estimation of the position and pose of the vehicle. Optionally, first, vehicle position information is determined based on navigation information (for example, GPS information (such as real time kinematic (RTK) information)), vehicle inertial measurement information collected by an IMU, or speed information collected by a wheeled odometer, and a specific road on which the vehicle is located in high-precision data and a specific lane on the road (that is, the second lane-level positioning) are inferred further based on the vehicle position information and the HD map information. In addition, the continuous tracking of the first lane-level positioning mentioned above is also applicable to the continuous tracking of the second lane-level positioning, which is not repeated herein.

It should be noted that due to the problem of insufficient freshness of the HD map or inaccurate GPS signal in the urban area, there is a possibility that the second lane-level positioning of the vehicle on the HD map that is determined in step S 120 is inaccurate. In view of this, in the invention, validity verification is performed on the HD map information through steps S130 and S140 by using the vehicle perception information collected by the sensors and the SD map information provided by the navigation map, and final positioning is determined based on a verification result, so as to improve the accuracy and reliability of lane positioning in the urban area.

In step S130, the validity verification is performed on the HD map information based on the vehicle perception information and the SD map information.

Optionally, on the basis of the fusion positioning technique, the road boundary or lane line information on the HD map may be compared with the real-time perceived road boundary or lane line information to comprehensively evaluate whether there is a match between features, such as a geometric distance of the road boundary and the color and line type of the lane line, so as to verify the accuracy of the HD map information. Specifically, first, a similarity between the lane boundary information of each lane in the road on which the vehicle is located on the HD map and the lane boundary information of each lane in the road on which the vehicle is located in the perception environment is determined, for example, similarities between the geometric feature, line type, color, intercept, and slope of each perceived lane line and the geometric feature, line type, color, intercept, and slope of each lane line on the HD map are calculated separately, and a weighted sum of the similarities of the geometric feature, line type, color, intercept, and slope is calculated according to a preset weight. Next, if the similarity in terms of the lane boundary information (for example, the above weighted sum) is greater than or equal to a second threshold, the validity verification succeeds; otherwise, the validity verification fails.

Optionally, under the premise that the road boundary is accurately perceived, the number of lanes in the current road that is perceived in real time may be combined with the real-time number of lanes that is provided by the navigation map to verify the lane information on the HD map. For example, first, a first number (N₁) of lanes in the road on which the vehicle is located in the perception environment is determined based on the vehicle perception information, a second number (N₂) of lanes in the road on which the vehicle is located on the SD map is determined based on the vehicle position information and the SD map information, and a third number (N₃) of lanes in the road on which the vehicle is located on the HD map is determined based on the vehicle position information and the HD map information. Next, N₃ is verified based on N₁ and/or N₂. For example, a weighted sum M of N₁ and N₂ may be calculated according to a preset weight, and if an absolute value of the difference between M and N₂ is greater than or equal to a first threshold, the validity verification succeeds; otherwise, the validity verification fails.

In addition, in an urban intersection area, the navigation map can provide detailed lane turning information, and the real-time perception can also detect a turning arrow marking on the road. Therefore, the HD map information can also be verified by combining the two types of information. For example, first, a first road marking on the road on which the vehicle is located in the perception environment is determined based on the vehicle perception information, turning information of the vehicle is determined based on the vehicle position information and the SD map information, and a second road marking on the road on which the vehicle is located on the HD map is determined based on the vehicle position information and the HD map information. If the first road marking matches the second road marking (for example, both are road left turn signs), or the turning information matches the second road marking (for example, the turning information indicates that the vehicle is turning right or is about to turn right, and there is a road right-turn sign at corresponding positioning on the HD map), the validity verification succeeds; otherwise, the validity verification fails.

In step S 140, a lane-level positioning result for the vehicle is determined based on the first lane-level positioning and/or the second lane-level positioning and a result of the validity verification.

If the validity verification succeeds in step S 130, it is determined that the second lane-level positioning of the vehicle on the HD map is accurate, and therefore, the second lane-level positioning obtained in step S 120 may be determined as the lane-level positioning result for the vehicle.

If the validity verification fails in step S 130, it is determined that the current second lane-level positioning of the vehicle on the HD map is inaccurate. In an embodiment, the positioning result on the HD map may be directly discarded (for example, if a lower similarity is obtained in the above similarity calculation), and the first lane-level positioning is determined as the lane-level positioning result for the vehicle. In another embodiment, the fusion positioning result in step S 120 may be corrected based on the first lane-level positioning to obtain corrected second lane-level positioning, and the corrected second lane-level positioning is determined as the lane-level positioning result for the vehicle. For example, if it is determined that the vehicle is located in the first lane in the perception environment and is located in the second lane on the HD map, the position and pose of the vehicle may be estimated using the fusion positioning technique on the assumption that the vehicle is located in the first lane, to improve the accuracy of positioning.

FIG. 2 is a schematic block diagram of a lane-level positioning apparatus 20 according to one or more embodiments of the invention. The lane-level positioning apparatus 20 includes a memory 210, a processor 220, and a computer program 230 stored on the memory 210 and executable on the processor 220, where the computer program 230 is executed to perform the lane-level positioning method 10 as shown in FIG. 1. For example, the lane-level positioning apparatus 20 may be a part of an electronic control unit (ECU) of a head unit system, or a control unit of an autonomous driving system. For example, the lane-level positioning apparatus 20 may alternatively be a control unit in another terminal (for example, a smartphone, or another edge device with limited computing power) that can be communicatively linked to the vehicle.

FIG. 3 is a schematic block diagram of a smart device 30 according to one or more embodiments of the invention. The smart device 30 includes the lane-level positioning apparatus 20 shown in FIG. 2. In some embodiments of the invention, the smart device 30 further includes at least one sensor, such as an image acquisition unit, configured to sense information. The sensor is in communication connection with any type of processor mentioned in the invention. Optionally, the smart device 30 may further include an autonomous driving system configured to guide the smart device to drive autonomously or assist in driving. The processor communicates with the sensor and/or the autonomous driving system to perform the method described in any one of the above embodiments. For example, the smart device 30 may include a driving device, a smart vehicle, an electric vehicle, a robot, etc.

In addition, as described above, the invention may also be implemented as a computer-readable storage medium in which a program for enabling a computer to perform the lane-level positioning method 10 as shown in FIG. 1 is stored. Here, the computer-readable storage medium may be various forms of computer-readable storage media, such as disks (for example, a magnetic disk, an optical disc, etc.), cards (for example, a memory card, an optical card, etc.), semiconductor memories (for example, a ROM, a non-volatile memory, etc.), and tapes (for example, a magnetic tape, a cassette tape, etc.).

Where applicable, various embodiments provided in the invention may be implemented by hardware, software, or a combination of hardware and software. Furthermore, where applicable, without departing from the scope of the invention, various hardware components and/or software components described in the invention may be combined into a composite component including software, hardware, and/or both. Where applicable, without departing from the scope of the invention, various hardware components and/or software components described in the invention may be separated into sub-components including software, hardware, or both. In addition, where applicable, it is contemplated that software components may be implemented as hardware components, and vice versa.

The related user's personal information that may be involved in the embodiments of the invention is all personal information that is provided actively by a user in a process of using a product/service or is generated by using a product/service and that is obtained through authorization by the user based on an appropriate purpose of a service scenario strictly in accordance with requirements of laws and regulations and in accordance with the principles of legality, legitimacy, and necessity.

The user's personal information processed in the invention varies depending on the specific product/service scenario, and shall be subject to the specific scenario in which the user uses the product/service. It may involve account information, device information, driving information, vehicle information, or other related information of the user. The applicant treats and handles the user's personal information with a high degree of diligence.

The invention attaches great importance to the security of the user personal information, and reasonable and feasible security protection measures that comply with industry standards have been taken to protect information of the user and prevent the personal information from unauthorized access, public invention, use, modification, damage or loss.

The embodiments and examples proposed herein are provided to describe as adequately as possible embodiments according to the invention and specific applications thereof and thus enable those skilled in the art to implement and use the invention. However, those skilled in the art will know that the above descriptions and examples are provided only for description and illustration. The provided description is not intended to cover all aspects of the invention or to limit the invention to an exact form that is disclosed.

## Claims

1. A lane-level positioning method, comprising the following steps:
A. determining first lane-level positioning of a vehicle in a perception environment based on vehicle perception information and standard-definition (SD) map information;
B. determining second lane-level positioning of the vehicle on a high-definition (HD) map by using a fusion positioning technique;
C. performing validity verification on HD map information based on the vehicle perception information and the SD map information; and
D. determining a lane-level positioning result for the vehicle based on the first lane-level positioning and/or the second lane-level positioning and a result of the validity verification.

2. The lane-level positioning method according to claim 1, wherein step A comprises:
generating perceived lane line information, road marking information, dynamic traffic information, and static occupancy information based on information collected by vehicle-mounted sensors of the vehicle; and
inputting the perceived lane line information, the road marking information, the dynamic traffic information, the static occupancy information, and the SD map information into a road boundary inference model, and determining, by using the road boundary inference model, drivable boundary information about a road on which the vehicle is located.

3. The lane-level positioning method according to claim 2, wherein the determining, by using the road boundary inference model, drivable boundary information about a road on which the vehicle is located comprises:
outputting, by using the road boundary inference model, lane boundary information and lane type information of each lane in the road on which the vehicle is located; and
determining, based on the lane boundary information and lane type information of each lane, the drivable boundary information about the road on which the vehicle is located.

4. The lane-level positioning method according to claim 2 or 3, wherein the generating perceived lane line information, road marking information, dynamic traffic information, and static occupancy information based on information collected by vehicle-mounted sensors of the vehicle comprises:
inputting the information collected by the vehicle-mounted sensors into a bird's eye view network, and determining the perceived lane line information, the road marking information, the dynamic traffic information, and the static occupancy information by using the bird's eye view network, wherein
the perceived lane line information comprises a geometric feature, a line type, and a color of a perceived lane line,
the dynamic traffic information comprises a category, a speed, and a position of a dynamic perceived object, and
the static occupancy information comprises occupancy information about a static perceived object.

5. The lane-level positioning method according to claim 2, 3 or 4, wherein step A further comprises:
determining, based on the drivable boundary information about the road on which the vehicle is located and the vehicle perception information, the first lane-level positioning for indicating a lane in which the vehicle is located.

6. The lane-level positioning method according to claim 5, wherein the method further comprises:
if the vehicle perception information indicates that the perceived lane line has an unclear boundary and/or an incomplete geometric feature, re-determining the first lane-level positioning upon determining, based on the SD map information output by a navigation map, that the vehicle changes a lane or a number of lanes changes.

7. The lane-level positioning method according to any of claims 1 to 6, wherein step B comprises:
determining vehicle position information based on navigation information and vehicle inertial measurement information; and
determining the second lane-level positioning of the vehicle on the HD map through map matching based on the vehicle position information and the HD map information.

8. The lane-level positioning method according to any of claims 1 to 7, wherein step C comprises:
determining, based on the vehicle perception information, a first number of lanes in a road on which the vehicle is located in the perception environment;
determining, based on vehicle position information and the SD map information, a second number of lanes in the road on which the vehicle is located on a SD map;
determining, based on the vehicle position information and the HD map information, a third number of lanes in the road on which the vehicle is located on a HD map; and
the validity verification succeeding if a similarity between the third number and a weighted sum of the first number and the second number is greater than or equal to a first threshold.

9. The lane-level positioning method according to any of claims 1 to 8, wherein step C comprises:
determining, based on the vehicle perception information, a first road marking on a road on which the vehicle is located in the perception environment;
determining turning information of the vehicle based on vehicle position information and the SD map information;
determining, based on the vehicle position information and the HD map information, a second road marking on the road on which the vehicle is located on a HD map; and
the validity verification succeeding if the first road marking or the turning information matches the second road marking.

10. The lane-level positioning method according to any of claims 1 to 9, wherein step C comprises:
determining a similarity between lane boundary information of each lane in a road on which the vehicle is located on a HD map and lane boundary information of each lane in a road on which the vehicle is located in the perception environment; and
the validity verification succeeding if the similarity in terms of the lane boundary information is greater than or equal to a second threshold.

11. The lane-level positioning method according to any of claims 1 to 10, wherein step D comprises:
determining the second lane-level positioning as the lane-level positioning result for the vehicle if the validity verification succeeds.

12. The lane-level positioning method according to any of claims 1 to 11, wherein step D comprises:
if the verification fails, correcting a fusion positioning result based on the first lane-level positioning to obtain corrected second lane-level positioning and determining the corrected second lane-level positioning as the lane-level positioning result for the vehicle; or
if the verification fails, determining the first lane-level positioning as the lane-level positioning result for the vehicle.

13. A lane-level positioning apparatus, comprising: a memory; a processor; and a computer program stored on the memory and executable on the processor, wherein the computer program is executed to perform the lane-level positioning method according to any one of claims 1 to 12.

14. A smart device, including the lane-level positioning apparatus according to claim 13.

15. A computer-readable storage medium, comprising instructions, wherein when the instructions are executed, the lane-level positioning method according to any one of claims 1 to 13 is performed.
